# EUROPÄISCHE PATENTSCHRIFT

(11) **EP 4 098 525 B1**
(45) Veröffentlichungstag und Bekanntmachung des Hinweises auf die Patenterteilung: **16.04.2025**
(21) Anmeldenummer: 22171263.1
(22) Anmeldetag: 03.05.2022
(51) Int. Cl.: B62H 5/14

(54) **RAHMENSCHLOSS**
FRAME LOCK
FERMETURE DU CHÂSSIS

(30) Priorität: 01.06.2021 DE 102021114202
(43) Veröffentlichungstag der Anmeldung: 07.12.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 3 587 227
- DE-A1- 102013 002 196
- DE-U1- 202014 006 369
- US-A- 6 043 733

## Beschreibung

Die Erfindung betrifft ein Rahmenschloss für ein Zweirad. Ein Rahmenschloss mit den Merkmalen des Oberbegriffs des Anspruchs 1 ist aus DE 20 2014 006 369 U1 bekannt. EP 3 587 227 A2 offenbart ein Rahmenschloss, dessen Bügel einen im Spritzgussverfahren mit einer Ummantelung versehenen Metallkern aufweist.

Von mobilen Zweiradschlössern unterscheiden sich Rahmenschlösser typischerweise dadurch, dass sie fest und in der Regel dauerhaft mit dem Rahmen des Zweirads verbunden, beispielsweise an dem Rahmen angeschraubt, sind. Das Rahmenschloss wird dabei derart angeordnet, dass ein Bügel des Rahmenschlosses wahlweise in eine Stellung verstellt werden kann, in der er zwischen die Speichen eines Rades des Zweirads eingreift, um ein Fahren mit dem Zweirad auf diese Weise zu verhindern. In dieser Stellung wird der Bügel zweckmäßigerweise durch einen Riegel des Rahmenschlosses gesichert, der sich zumindest idealerweise ausschließlich über einen Schließzylinder oder eine sonstige Schließeinrichtung des Rahmenschlosses verstellen lässt, zu deren Betätigung ein Nutzer über ein Schließgeheimnis, wie etwa einen Schlüssel, verfügen muss. Typische Bauformen für den Bügel sind einerseits eine Ausbildung als Schwenkbügel mit geradem Verlauf und andererseits eine Ausbildung als Drehbügel mit kreisbogenförmigem Verlauf.

Insbesondere kann ein Rahmenschloss einen Schlosskörper mit einem Riegel sowie einen Drehbügel umfassen, der sich längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist, wobei der Drehbügel eine Sperrstruktur mit einem Anschlagabschnitt aufweist, wobei der Riegel zwischen einer Entriegelungsstellung und einer Verriegelungsstellung verstellbar ist, und wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt.

Für die Zuverlässigkeit des Rahmenschlosses ist die Stabilität des Drehbügels ein entscheidender Faktor. Damit das Rahmenschloss möglichst nicht aufgebrochen werden kann, muss der Drehbügel mechanisch besonders stabil sein. Zugleich wird angestrebt, den Drehbügel möglichst kostengünstig und möglichst weitgehend automatisiert herstellen zu können. Der Drehbügel ist dabei üblicherweise aus einem besonders harten und festen Material, beispielsweise aus einem gehärteten Metall, ausgebildet. Insbesondere kann der Drehbügel aus einem Stangenmaterial, wie etwa einem Metalldraht, hergestellt sein. Allerdings weist der Drehbügel dadurch auch ein vergleichsweise großes Gewicht auf, wobei für Zweiradzubehör, insbesondere im professionellen Bereich, in der Regel ein möglichst geringes Gewicht angestrebt.

Um relativ zu dem Schlosskörper verstellbar zu sein, kann der Drehbügel zumindest teilweise in einem Gehäuse des Schlosskörpers, insbesondere in einer darin ausgebildeten Drehbügelaufnahme, aufgenommen und darin beweglich gelagert sein. Die Drehbügelaufnahme dient dabei zugleich der Führung des Drehbügels, so dass er zumindest im Wesentlichen ausschließlich entlang der Kreisbahn verstellt werden kann. Insbesondere aufgrund der an dem Drehbügel ausgebildeten Sperrstruktur kann der Drehbügel entlang seiner Längserstreckung Erhebungen und/oder Vertiefungen aufweisen, so dass er unter Umständen nicht oder nur in Teilbereichen seiner Längserstreckung flächig an einer Innenwand der Drehbügelaufnahme anliegen und daran geführt werden kann. Um ein Verkanten oder Verklemmen des Drehbügels in der Drehbügelaufnahme zu vermeiden, ist zudem in der Regel ein gewisses Spiel zwischen dem Außenumfang des Drehbügels und dem Innenumfang der Drehbügelaufnahme vorgesehen. Zusätzliches Spiel kann sich darüber hinaus aus typischen Fertigungstoleranzen bei der Herstellung des Drehbügels ergeben. Aus diesen Gründen kann der Drehbügel in der Drehbügelaufnahme oftmals kleinere Bewegungen quer zu seiner Längserstreckung ausführen und dabei gegen Ränder der Drehbügelaufnahme schlagen. Das kann insbesondere während einer Fahrt mit dem Zweirad, an dem das Rahmenschloss montiert ist, auftreten und dann zu wahrnehmbaren und störenden Klappergeräuschen führen.

Es ist eine Aufgabe der Erfindung, ein Rahmenschloss für ein Zweirad mit einem Drehbügel sowie ein Verfahren zur Ausbildung eines Drehbügels für ein solches Rahmenschloss bereitzustellen, der stabil und dabei zugleich besonders leicht und geräuscharm sowie vergleichsweise einfach und möglichst weitgehend automatisiert herstellbar ist.

Die Aufgabe wird gelöst durch ein Rahmenschloss mit den Merkmalen des Anspruchs 1 sowie durch ein Verfahren mit den Merkmalen des Anspruchs 12. Vorteilhafte Ausführungsformen ergeben sich aus den abhängigen Ansprüchen, der vorliegenden Beschreibung sowie den Figuren.

Das erfindungsgemäße Rahmenschloss für ein Zweirad umfasst einen Schlosskörper mit einem Riegel sowie einen Drehbügel, der sich längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist.

Durch die Erstreckung längs der Kreisbahn weist der Drehbügel eine Kreisbogenform auf, die sich über einen bestimmten Teilbereich der kreisförmig geschlossenen Kreisbahn erstreckt, beispielsweise über einen Winkelbereich von mindestens 200° und/oder höchstens 250°, vorzugsweise von mindestens 210° und/oder höchstens 240°, insbesondere von etwa 225° oder 230°. Der Durchmesser der Kreisbahn kann im Bereich zwischen 10 cm und 15 cm liegen, beispielsweise etwa 13 cm betragen. Im Querschnitt kann der Drehbügel einen Durchmesser in der Größenordnung von einigen Millimetern bis wenigen Zentimetern aufweisen. Beispielsweise kann dieser Durchmesser zumindest im Mittel etwa 8 bis 9 mm betragen.

Da der Drehbügel zwischen der Offenstellung und der Geschlossenstellung verstellbar ist, kann der Drehbügel aus der Offenstellung in eine Schließrichtung bis in die Geschlossenstellung und umgekehrt aus der Geschlossenstellung in eine zu der Schließrichtung entgegengesetzte Öffnungsrichtung bis in die Offenstellung verstellt werden. Dadurch wird jedoch nicht ausgeschlossen, dass der Drehbügel noch in anderer Weise, insbesondere in Schließrichtung über die Geschlossenstellung hinaus und/oder in Öffnungsrichtung über die Offenstellung hinaus, verstellbar sein kann.

Bei einem Verstellen des Drehbügels entlang der Kreisbahn wird der Drehbügel mit seiner kreisbogenförmigen Längserstreckung entlang der Kreisbahn verschoben, so dass er die Kreisbahn nicht verlässt, sondern sich nur über einen - hinsichtlich seiner Lage, jedoch nicht hinsichtlich seiner Winkelausdehnung - veränderten Teilbereich der Kreisbahn erstreckt. Das Verstellen des Drehbügels entspricht dabei einem Drehen des Drehbügels um eine Drehachse, die durch den Mittelpunkt der Kreisbahn verläuft und zu einer Ebene, in der die Kreisbahn liegt, senkrecht ausgerichtet ist.

Bei der Verstellbarkeit des Drehbügels entlang der Kreisbahn handelt es sich um eine grundsätzliche Verstellbarkeit, die sich insbesondere aus einer entsprechenden Lagerung des Drehbügels an dem Schlosskörper ergeben kann. Die Verstellbarkeit muss aber nicht permanent vorliegen, sondern kann durch den genannten Riegel blockiert sein, insbesondere um den Drehbügel mittels des Riegels in einer oder mehreren verschiedenen bestimmten Stellungen sichern zu können. Vorzugsweise ist der Drehbügel zumindest aus der Offenstellung bis in die Geschlossenstellung sowie aus der Geschlossenstellung bis in die Offenstellung verstellbar, wenn weder der Riegel noch irgendein Hindernis in der Bewegungsbahn (zum Beispiel eine Speiche des Rades des Zweirads) ein Verstellen blockieren.

Die Kreisbahn kann teilweise durch den Schlosskörper des Rahmenschlosses verlaufen, so dass sich der Drehbügel teilweise in oder durch den Schlosskörper erstrecken kann und dabei innerhalb des Schlosskörpers mit dem Riegel zusammenwirken kann. Vorzugsweise ist der Riegel dabei vollständig innerhalb eines Gehäuses des Schlosskörpers angeordnet, um von außen möglichst unzugänglich zu sein. Ferner kann der Drehbügel teilweise in dem Gehäuse des Schlosskörpers aufgenommen sein. Insbesondere kann der Drehbügel zumindest teilweise in einer in dem Schlosskörpers ausgebildeten Drehbügelaufnahme aufgenommen und darin beweglich, nämlich relativ zu dem Schlosskörper zwischen der Offenstellung und der Geschlossenstellung verstellbar, gelagert sein.

In der Geschlossenstellung erstreckt sich der Drehbügel vorzugsweise aus dem Schlosskörper, insbesondere aus dem genannten Gehäuse des Schlosskörpers, heraus und anschließend zumindest mit einem freien Ende wieder in den Schlosskörper, insbesondere in das Gehäuse, hinein, so dass der Schlosskörper und der Drehbügel in der Geschlossenstellung vorzugsweise einen geschlossenen Ring bilden. Auf diese Weise kann das jeweilige Rad besonders zuverlässig gegen Drehung gesperrt werden. In der Offenstellung erstreckt sich der Drehbügel dagegen aus dem Schlosskörper hinaus, jedoch nicht wieder in diesen hinein oder ist zumindest nahezu vollständig in dem Schlosskörper, insbesondere in dem Gehäuse, aufgenommen.

Selbstverständlich kann der Drehbügel in seiner Geschlossenstellung das Rad eines jeweiligen Zweirads nur dann gegen Drehung sperren, wenn das Rahmenschloss in geeigneter Weise an dem Zweirad montiert ist. Mit anderen Worten: Das Rahmenschloss ist dazu ausgebildet, derart an dem Zweirad angeordnet zu werden, dass der Drehbügel in seiner Geschlossenstellung ein Rad des Zweirads gegen Drehung sperrt (insbesondere indem er das Rad durchgreift) und in seiner Offenstellung das Rad für eine Drehung freigibt.

Erfindungsgemäß weist der Drehbügel eine Sperrstruktur mit einem Anschlagabschnitt auf, wobei der Riegel zwischen einer Entriegelungsstellung und einer Verriegelungsstellung verstellbar ist, und wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt.

Der Riegel kann insbesondere relativ zu dem genannten Gehäuse des Schlosskörpers zwischen der Entriegelungsstellung und der Verriegelungsstellung verstellbar sein. Bei dem Verstellen kann es sich beispielsweise um ein lineares Versetzen handeln. Vorzugsweise lässt sich der Riegel nur über eine an dem Schlosskörper, insbesondere in dem Schlosskörper, vorgesehene Schließeinrichtung, bevorzugt in Form eines Schließzylinders, verstellen, mit der er, z.B. über einen Mitnehmer, gekoppelt ist und die nur mittels eines ihr zugeordneten Schlüssels betätigbar ist.

Auch bei der Verstellbarkeit des Riegels handelt es sich um eine grundsätzliche Verstellbarkeit, die nicht permanent vorliegen muss, sondern insbesondere von der jeweiligen Stellung des Drehbügels abhängen kann. Vorzugsweise ist der Riegel jedenfalls dann aus der Entriegelungsstellung bis in die Verriegelungsstellung und umgekehrt aus der Verriegelungsstellung bis in die Entriegelungsstellung verstellbar, wenn sich der Drehbügel in seiner Geschlossenstellung befindet. Außerdem kann der Riegel insbesondere auch dann aus der Entriegelungsstellung bis in die Verriegelungsstellung und umgekehrt aus der Verriegelungsstellung bis in die Entriegelungsstellung verstellbar sein, wenn sich der Drehbügel in seiner Offenstellung befindet.

Somit kann der Drehbügel in seiner Geschlossenstellung durch den Riegel gesichert werden, indem der Riegel in seine Verriegelungsstellung verstellt wird und dann den Anschlagabschnitt der Sperrstruktur des Drehbügels hintergreift. Die Sperrung gegen ein Verstellen des Drehbügels entlang der Kreisbahn ist besonders zuverlässig, wenn der Anschlagabschnitt zumindest im Wesentlichen senkrecht zu der zu sperrenden Bewegungsrichtung, also zum Verlauf der Kreisbahn, des Drehbügels ausgerichtet ist, was daher bevorzugt ist.

Der Anschlagabschnitt ist vorzugsweise, jedoch nicht notwendigerweise, als Anschlagfläche, also flächig, ausgebildet. Grundsätzlich kann der Anschlagabschnitt auch durch eine Kante oder eine Kontur der Sperrstruktur gebildet werden.

Die Sperrstruktur kann auf viele verschiedene Weisen ausgebildet sein. Eine grundsätzlich denkbare Weise besteht darin, dass die Sperrstruktur einen Einschnitt oder eine Aussparung in dem Drehbügel umfasst, wobei sich der Einschnitt oder die Aussparung bezüglich des Mittelpunkts der Kreisbahn insbesondere radial von außen nach innen in den Drehbügel hinein erstrecken kann. Der Anschlagabschnitt kann dabei als eine Seitenwand eines solchen Einschnitts oder einer solchen Aussparung ausgebildet sein. Der Anschlagabschnitt kann aber auch durch eine Seitenwand einer von dem Drehbügel vorstehenden Struktur gebildet werden.

Die Sperrstruktur kann mehrere Anschlagabschnitte aufweisen, die jeweils von dem Riegel hintergriffen werden können, um verschiedene Stellungen des Drehbügels gegen ein Verlassen der jeweiligen Stellung in zumindest eine Verstellrichtung zu sichern. Dabei können mehrere der Anschlagabschnitte dem Sichern derselben Stellung dienen, sei es bezüglich derselben Verstellrichtung oder zueinander entgegengesetzter Verstellrichtungen.

Das genannte Hintergreifen des Anschlagabschnitts durch den Riegel ist auf das zu sperrende Verstellen des Drehbügels bezogen zu verstehen. Insbesondere greift der Riegel dabei quer zum Verlauf der Kreisbahn in eine Bewegungsbahn des Anschlagabschnitts ein, die der Anschlagabschnitt durchlaufen würde, wenn sich der Riegel in seiner Entriegelungsstellung befände und der Drehbügel in die zu sperrende Verstellrichtung entlang der Kreisbahn verstellt würde.

Wenn sich der Drehbügel in seiner Geschlossenstellung befindet und sich der Riegel in seiner Verriegelungsstellung befindet, liegt der Riegel vorzugsweise an dem Anschlagabschnitt an oder weist zumindest einen nur geringen Abstand, beispielsweise von weniger als 1 mm, insbesondere von wenigen hundert Mikrometern, von dem Anschlagabschnitt auf. Dadurch wird der Drehbügel vorteilhafterweise dagegen gesperrt, die Geschlossenstellung überhaupt in Richtung der Offenstellung zu verlassen. Grundsätzlich kann der Riegel aber auch einen größeren Abstand von dem Anschlagabschnitt aufweisen, so dass der Drehbügel zwar um eine diesem Abstand entsprechende Strecke aus der Geschlossenstellung verstellt werden kann, aber jedenfalls dagegen gesperrt wird, eine Stellung zu erreichen, in welcher der Drehbügel das Rad nicht länger zuverlässig gegen eine Drehung sperren würde.

Erfindungsgemäß ist der Drehbügel als Spritzgießteil aus einem Kunststoff mit einer Einlage aus einem anderen Material mit im Vergleich zu dem Kunststoff größerer Festigkeit und/oder Härte ausgebildet. Mit anderen Worten kann der Drehbügel dadurch ausgebildet sein, dass eine feste und/oder harte Einlage mit einem Kunststoff umspritzt wurde. Die genannte Festigkeit kann insbesondere die Zug-, Druck- und/oder Biegefestigkeit der Einlage umfassen. Die genannte Härte kann beispielsweise durch die Rockwell-Härte oder Vickers-Härte der Einlage definiert sein. Als Kunststoff kommen grundsätzlich alle technischen Kunststoffe in Betracht, die sich für ein Spritzgießen eignen.

Die Ausbildung eines Drehbügels als Spritzgießteil ist untypisch, da Spritzgießteile in der Regel keine für die erforderliche Sicherheit des Drehbügels hinreichende Festigkeit und Härte aufweisen. Allerdings kann durch das Vorsehen der Einlage aus einem im Vergleich zu dem für das Umspritzen der Einlage verwendeten Kunststoff festeren bzw. härteren Material die mechanische Stabilität des Drehbügels insgesamt im Vergleich zu einem Spritzgießteil ohne Einlage so sehr verbessert werden, dass ein als Spritzgießteil ausgebildeter Drehbügel für eine Verwendung in einem Rahmenschloss geeignet ist. Zugleich weist der als Spritzgießteil ausgebildete Drehbügel gegenüber konventionellen Drehbügeln, die in der Regel vollständig aus Metall, insbesondere aus einem metallischen Stangenmaterial, wie etwa einer Stahlstange, gebildet sind, ein vorteilhaft geringes Gewicht auf. Insbesondere im Hinblick auf das Gewicht ist es dabei vorteilhaft, wenn der Volumenanteil des Spritzgießteils an dem Drehbügel beispielsweise etwa 20% beträgt und/ oder der Volumenanteil der Einlage beispielsweise etwa 80% beträgt. Sofern eine hinreichende Sicherheit durch die Einlage gewährleistet werden kann, sind auch größere Volumenanteile des Spritzgießteils bzw. geringere Volumenanteile der Einlage denkbar.

Ein weiterer Vorteil der erfindungsgemäßen Ausbildung des Drehbügels besteht darin, dass durch das Spritzgießen die äußere Form des Drehbügels vergleichsweise flexibel definiert werden kann. Darüber hinaus ist die äußere Form des Drehbügels bei einem Spritzgießteil auch präziser definiert als, wenn sie etwa durch Umformung, insbesondere durch eine Kaltumformung, ausgebildet wird. Daher lassen sich Fertigungstoleranzen der Einlage durch das Umspritzen der Einlage ausgleichen, so dass der Drehbügel nach außen eine besonders glatte Oberfläche sowie eine insgesamt relativ zu einer Drehbügelaufnahme des Schlosskörpers, in der aufgenommen ist, besonders passend ausgebildete Form aufweisen kann. Auf diese Weise kann übermäßiges Spiel des Drehbügels relativ zu dem Schlosskörper reduziert werden, wodurch auch Klappergeräusche vermieden werden können.

Durch die Wahl des jeweiligen Kunststoffs für das Umspritzen kann außerdem die Beschaffenheit der Oberfläche des Drehbügels in gewissem Maße einstellbar sein. Insbesondere wird vorzugsweise ein Kunststoff gewählt, mit dem sich eine Oberfläche mit guten Gleiteigenschaften erzeugen lässt. Dies kann noch zusätzlich zu einer zuverlässigen und geräuscharmen Führung des Drehbügels an bzw. in dem Schlosskörper beitragen.

Die Einlage erstreckt sich vorzugsweise über die gesamte Längserstreckung des Drehbügels, d. h. über die gesamte Erstreckung des Drehbügels entlang der genannten Kreisbahn, und kann dabei insbesondere über die gesamte Längserstreckung des Drehbügels von dem Kunststoff umspritzt sein. Dabei muss die Einlage aber nicht vollständig von dem Spritzgießteil nach außen überdeckt sein. Bei dem Umspritzen können nämlich durch eine entsprechende Ausbildung des Spritzgießwerkzeugs Bereiche der Einlage ausgespart werden, d. h. davon ausgenommen werden, mit dem Kunststoff überdeckt zu werden. Auf diese Weise können in dem Spritzgießteil Aussparungen ausgebildet werden, durch die die Einlage von außen zugänglich ist. Zudem kann sich das Umspritzen grundsätzlich auf einen Teilbereich der Längserstreckung des Drehbügels beschränken.

Das Spritzgießteil ist vorzugsweise einteilig ausgebildet. Das Spritzgießteil kann sich über die gesamte Längserstreckung der Einlage und/oder über die gesamte Längserstreckung des Drehbügels erstrecken. Insbesondere kann die Einlage entlang ihrer gesamten Längserstreckung jeweils in zumindest eine Richtung quer zur Längserstreckung von dem Kunststoff, mit dem sie umspritzt ist, überdeckt sein. Das ist jedoch nicht zwingend der Fall. Vorzugsweise erstreckt sich das Spritzgießteil entlang der Kreisbahn zumindest über denjenigen Abschnitt des Drehbügels, der in der Geschlossenstellung des Drehbügels innerhalb des Schlosskörpers angeordnet ist. Des Weiteren ist es bevorzugt, wenn die Einlage längs der Kreisbahn beispielsweise über mindestens 90°, insbesondere über mindestens 120°, vorzugsweise über mindestens 140° oder 150°, jeweils zumindest über einen Teil ihres Umfangs (in Umfangsrichtung um den Verlauf der Kreisbahn) von dem Spritzgießteil überdeckt ist. Das Spritzgießteil kann sich dementsprechend über mindestens 90°, insbesondere über mindestens 120°, vorzugsweise über mindestens 140° oder 150°, längs der Kreisbahn erstrecken.

In Umfangsrichtung um den Verlauf der Kreisbahn wird die Einlage vorzugsweise zumindest in einem oder mehreren Abschnitten ihrer Längserstreckung vollständig von dem Spritzgießteil umschlossen. Die Abschnitte der Längserstreckung, in denen die Einlage in Umfangsrichtung vollständig von dem Spritzgießteil umschlossen ist, entsprechen zusammen beispielsweise mehr als 70 %, vorzugsweise mehr als 80 %, insbesondere mehr als 90 %, der Längserstreckung des Spritzgießteils oder der Einlage. In den übrigen Abschnitten, in denen die Einlage in Umfangsrichtung nicht vollständig von dem Spritzgießteil umschlossen ist, können Aussparungen des Spritzgießteils vorgesehen sein. Zudem können auch Endabschnitte der Längserstreckung der Einlage vollständig nicht umspritzt sein.

Dadurch dass die Einlage von dem Spritzgießteil zumindest abschnittsweise umschlossen wird, weist das Spritzgießteil einen besonders zuverlässigen Halt an der Einlage auf. Außerdem kann dadurch eine gute Führung des Drehbügels in einer Drehbügelaufnahme des Schlosskörpers erreicht werden. Durch das Spritzgießteil kann zudem auf einfache Weise eine für verschiedene Funktionen vorteilhafte äußere Form des Drehbügels herbeigeführt werden. Beispielsweise können Teile der Sperrstruktur durch das Spritzgießteil gebildet werden oder durch eine entsprechende Ausbildung des Spritzgießteils besser zugänglich sein oder in ihrer Funktion sogar unterstützt werden.

Gemäß einer vorteilhaften Ausführungsform umfasst die Einlage ein oder mehrere Metallteile. Bevorzugt sind die Metallteile dabei aus gehärtetem Metall und/oder Metalldraht, beispielsweise einem Stahldraht, insbesondere einem Federstahldraht, gebildet. Die Einlage weist dabei zumindest in einem überwiegenden Teil ihrer Längserstreckung vorzugsweise einen konstanten, insbesondere rechteckigen oder kreisrunden, Querschnitt auf. Diesen Querschnitt kann die Einlage insbesondere zumindest entlang eine Blockierabschnitts des Drehbügels aufweisen, der in der Geschlossenstellung des Drehbügels außerhalb des Schlosskörpers des Rahmenschlosses angeordnet ist und mit dem der Drehbügel daher in seiner Geschlossenstellung in das Rad des Zweirads eingreifen und es dadurch gegen Drehung sperren kann.

Wenn die Einlage aus einem Metalldraht gebildet ist, kann dieser in eine dem Verlauf der Kreisbahn entsprechende Kreisbogenform gebogen sein. Dabei können auch mehrere Metalldrähte oder mehrere Abschnitte desselben Metalldrahts parallel zueinander angeordnet sein und einen zur Kreisbahn koaxialen Verlauf aufweisen. Im Falle einer Ausbildung der Einlage aus mehreren Metalldrähten können diese als kompaktes Bündel oder aber beanstandet voneinander angeordnet sein. Insbesondere kann vorgesehen sein, dass die Metalldrähte in einer gemeinsamen Ebene oder innerhalb einer Zylindermantelfläche um eine zur Ebene der Kreisbahn senkrechte und durch den Mittelpunkt der Kreisbahn verlaufende Zylinderachse liegen. Der Drehbügel kann dadurch auch insgesamt eine flache Form aufweisen. Die mehreren Metalldrähte oder mehreren Abschnitte desselben Metalldrahts werden dabei vorzugsweise gemeinsam umspritzt und sind dann gemeinsam von dem Spritzgießteil nach außen überdeckt. Der Kunststoff kann sich dabei zwischen die Metalldrähte bzw. die Abschnitte erstrecken, so dass innerhalb des Spritzgießteils keine Hohlräume frei bleiben. Auch unabhängig von der Ausbildung der Einlage ist es bevorzugt, wenn das Spritzgießteil keine Hohlräume aufweist.

Alternativ oder zusätzlich zu einem oder mehreren Metallteilen kann die Einlage gemäß einer weiteren vorteilhaften Ausführungsform ein oder mehrere Keramikteile umfassen. Auch durch eine Einlage aus Keramik kann das Spritzgießteil einen besonders festen und/oder harten Kern aufweisen, so dass der Drehbügel insgesamt mechanisch besonders stabil, dabei aber vergleichsweise leicht sein kann.

Gemäß einer weiteren vorteilhaften Ausführungsform weist die Einlage den Anschlagabschnitt auf. Auf diese Weise kann der Drehbügel an seiner Außenseite überwiegend aus dem Spritzgießteil bestehen und damit besonders zuverlässig und spielfrei an dem Schlosskörper geführt gelagert sein, während der für das sichere Verriegeln des Drehbügels in seiner Geschlossenstellung wichtige Anschlagabschnitt an der im Vergleich zum Spritzgießteil festeren bzw. härteren Einlage ausgebildet ist. Somit lassen sich durch das Spritzgießteil Vorteile hinsichtlich der äußeren Form und des Gewichts des Drehbügels erzielen, ohne dass die Sicherheit des Drehbügels im Vergleich zu einem herkömmlichen Drehbügel beeinträchtigt wird.

Gemäß einer weiteren Ausführungsform umfasst die Sperrstruktur zumindest einen von der Einlage vorstehenden Steg, der den Anschlagabschnitt aufweist. Es muss dabei nicht der gesamte Steg von der Einlage vorstehen, sondern es genügt, wenn der Steg teilweise von der Einlage vorsteht. Ein Teil des Stegs kann sich auch, insbesondere quer zur Längserstreckung des Drehbügels, in die Einlage hinein erstrecken. Der von der Einlage vorstehende Teil des Stegs kann insbesondere eine relativ zu seiner Umgebung konvexe Struktur darstellen.

Der Steg kann beispielsweise relativ zu dem Querschnitt eines angrenzenden Abschnitts der Einlage vorstehen, insbesondere relativ zu dem Querschnitt eines Metalldrahts, aus dem die Einlage gebildet ist, bevor daran die Sperrstruktur oder zumindest der Steg ausgebildet wurde. Dass der Steg über einen Querschnitt vorsteht, meint dabei insbesondere, dass sich der Steg - entlang der Erstreckung des Drehbügels längs der Kreisbahn betrachtet - über eine Außenkontur des Querschnitts hinaus erstreckt.

Die Richtung, in die der Steg vorsteht, ist vorzugsweise senkrecht zur Längserstreckung des Drehbügels. Insbesondere kann die Richtung zumindest im Wesentlichen radial bezüglich des Mittelpunkts eines zur Längserstreckung des Drehbügels senkrechten Querschnitts des Drehbügels sein.

Der Anschlagabschnitt ist vorzugsweise unmittelbar an dem Steg ausgebildet. Beispielsweise kann der Anschlagabschnitt durch eine Stirnseite des Stegs gebildet werden. Insbesondere kann dabei auch der Anschlagabschnitt ganz oder zumindest teilweise von der Einlage vorstehen.

Der Steg stellt somit einen Teil der Sperrstruktur dar, mit welcher der Riegel zusammenwirkt, um den Drehbügel gegen ein Verstellen aus einer jeweiligen Stellung zu sperren. Hierzu ist der Steg vorteilhafterweise an entsprechender Position an dem Drehbügel ausgebildet. Mit anderen Worten ist der Steg dazu ausgebildet (insbesondere derart angeordnet), dass der Riegel den Anschlagabschnitt des Stegs hintergreift, wenn sich der Drehbügel in seiner Geschlossenstellung befindet und sich der Riegel in seiner Verriegelungsstellung befindet.

Der Steg, insbesondere die gesamte Sperrstruktur, ist vorzugsweise innerhalb eines Abschnitts der Längserstreckung des Drehbügels, d.h. der Erstreckung des Drehbügels längs der Kreisbahn, angeordnet, der sowohl in der Geschlossenstellung als auch in der Offenstellung des Drehbügels (sowie in jeder Stellung dazwischen) innerhalb des Schlosskörpers, insbesondere innerhalb eines Gehäuses des Schlosskörpers, angeordnet und somit vorteilhafterweise von außen nicht zugänglich ist.

Der Anschlagabschnitt an dem Steg, vorzugsweise der gesamte Steg, kann durch Kaltumformung ausgebildet sein. Vorzugsweise ist die gesamte Sperrstruktur durch eine nicht-spanende Bearbeitung der Einlage ausgebildet. Insbesondere kann die gesamte Einlage, gegebenenfalls mit Ausnahme von Endabschnitten an den beiden Enden der Längserstreckung der Einlage, ausschließlich in nicht-spanender Weise bearbeitet sein.

Die Kaltumformung bietet gegenüber einer spanenden Bearbeitung der Einlage den Vorteil, dass die Materialstruktur des bearbeiteten Materials durch die Bearbeitung weniger stark beeinträchtigt wird. Insbesondere kann durch eine Kaltumformung vermieden werden, dass für die Stabilität der Materialstruktur wichtige Fasern, insbesondere entlang der Längserstreckung der Einlage verlaufende Hauptfasern der Materialstruktur, unterbrochen werden.

Wenn die Sperrstruktur den genannten von der Einlage vorstehenden Steg umfasst, ist es ferner bevorzugt, wenn sich das Spritzgießteil in einem an den Steg längs der Kreisbahn angrenzenden Abschnitt der Längserstreckung des Drehbügels von der Einlage aus zumindest so weit in die Richtung, in die der Steg vorsteht, erstreckt, wie der Steg von der Einlage vorsteht. Mit anderen Worten erstreckt sich das Spritzgießteil in Nachbarschaft zu dem Steg in die Richtung, in die der Steg von der Einlage vorsteht, zumindest um dasselbe Maß, um das auch der Steg von der Einlage vorsteht. Der genannte Abschnitt grenzt dabei vorzugsweise auf der dem Anschlagabschnitt des Stegs bezüglich der Kreisbahn gerade entgegengesetzten Seite des Stegs an den Steg an. Insbesondere wenn sich das Spritzgießteil von der Einlage aus über den Steg hinaus in die genannte Richtung erstreckt, kann das Spritzgießteil den Steg auch überdecken, sich also längs der Kreisbahn bis über den Steg erstrecken. Dadurch, dass sich das Spritzgießteil von der Einlage aus quer zum Verlauf der Kreisbahn zumindest so weit erstreckt, wie der Steg von der Einlage vorsteht, kann sichergestellt werden, dass sich der Steg nicht über eine durch eine Außenkontur des Querschnitts des Spritzgießteils definierte Außenseite des Drehbügels hinaus erstreckt, was andernfalls zu einem Verkanten oder Verklemmen des Drehbügels führen könnte.

Gemäß einer weiteren vorteilhaften Ausführungsform umfasst die Sperrstruktur zumindest zwei von der Einlage in dieselbe Richtung vorstehende Stege, die jeweils einen Anschlagabschnitt aufweisen und auch im Übrigen insbesondere entsprechend einer der für den vorstehend genannten Steg beschriebenen Weisen ausgebildet sein können. Bei dem Anschlagabschnitt eines der beiden Stege kann es sich insbesondere um den genannten Anschlagabschnitt handeln, der von dem Riegel hintergriffen werden kann, wenn sich der Drehbügel in seiner Geschlossenstellung befindet. Allgemein kann bei dieser Ausführungsform vorgesehen sein, dass der Riegel, wenn sich der Drehbügel in einer bestimmten Stellung befindet und sich der Riegel in seiner Verriegelungsstellung befindet, den Anschlagabschnitt eines jeweiligen der Stege der Einlage hintergreift und den Drehbügel dadurch gegen ein Verstellen aus der stimmten Stellung (jedenfalls in eine der zwei zueinander entgegengesetzten möglichen Verstellrichtungen entlang der Kreisbahn) sperrt. Insbesondere hintergreift der Riegel dabei den jeweiligen Anschlagabschnitt bezüglich der zu sperrenden Verstellrichtung.

Während es sich bei dieser bestimmten Stellung für einen der Stege insbesondere um die Geschlossenstellung handeln kann, kann es sich für den anderen grundsätzlich ebenfalls um die Geschlossenstellung handeln (beispielsweise um den Drehbügel in der Geschlossenstellung nicht nur gegen ein Verstellen in die Öffnungsrichtung zu sperren, sondern auch gegen ein Verstellen in die Schließrichtung über die Geschlossenstellung hinaus) oder aber um eine andere Stellung des Drehbügels handeln. Auf diese Weise kann der Drehbügel mittels des Riegels nicht nur in seiner Geschlossenstellung gegen ein Verstellen (in zumindest eine Richtung entlang der Kreisbahn) gesperrt werden, sondern auch in einer oder (wenn die Sperrstruktur noch weitere Stege umfasst) mehreren weiteren Stellungen. Bei der anderen bestimmten Stellung kann es sich insbesondere um die Offenstellung des Drehbügels handeln. Mit anderen Worten ist dann vorgesehen, dass der Riegel, wenn sich der Drehbügel in seiner Geschlossenstellung befindet und sich der Riegel in seiner Verriegelungsstellung befindet, den Anschlagabschnitt des einen der zumindest zwei Stege der Einlage hintergreift und den Drehbügel dadurch gegen ein Verstellen aus der Geschlossenstellung sperrt und, wenn sich der Drehbügel in seiner Offenstellung befindet und sich der Riegel in seiner Verriegelungsstellung befindet, den Anschlagabschnitt des anderen der zumindest zwei Stege der Einlage hintergreift und den Drehbügel dadurch gegen ein Verstellen aus der Offenstellung sperrt.

Wenn die Sperrstruktur die genannten zwei von der Einlage in dieselbe Richtung vorstehenden Stege umfasst, ist es ferner bevorzugt, wenn sich das Spritzgießteil von dem einen der zwei Stege längs der Kreisbahn bis zu den anderen erstreckt und sich dabei in einem durch die zwei Stege begrenzten Abschnitt der Längserstreckung des Drehbügels von der Einlage aus zumindest so weit in diese Richtung erstreckt, wie die zwei Stege von der Einlage vorstehen. Mit anderen Worten erstreckt sich das Spritzgießteil zwischen den zwei Stegen zumindest um dasselbe Maß in die genannte Richtung, um das auch die zwei Stege von der Einlage vorstehen. Die Anschlagabschnitte der beiden Stege befinden sich dabei vorzugsweise auf derjenigen Seite des jeweiligen Stegs, die bezüglich des Verlaufs der Kreisbahn von dem jeweils anderen Steg wegweist.

Die zumindest zwei in dieselbe Richtung von der Einlage vorstehenden Stege können beispielsweise bezüglich des Mittelpunkts der Kreisbahn beide radial nach innen, beide radial nach außen oder beide in dieselbe axiale, d. h. zur Ebene der Kreisbahn senkrechte, Richtung von der Einlage vorstehen. Die zwei Stege stehen vorzugsweise gleich weit, d. h. um dasselbe Maß, von der Einlage vor. Wenn sie unterschiedlich weit von der Einlage vorstehen, erstreckt sich das Spritzgießteil in dem genannten Abschnitt der Längserstreckung des Drehbügels zwischen den beiden Stegen vorzugsweise zumindest so weit in die genannte Richtung, wie der von der Einlage weiter vorstehende der zwei Stege von der Einlage vorsteht. Insbesondere wenn sich das Spritzgießteil von der Einlage aus über mehr als dieses Maß in die genannte Richtung erstreckt, kann das Spritzgießteil einen der beiden Stege oder beide Stege längs des Verlaufs der Kreisbahn auch überdecken.

Durch die genannte Ausbildung kann das Spritzgießteil den Zwischenraum zwischen den beiden Stegen entlang der Kreisbahn sozusagen auffüllen. Das kann vorteilhafter Weise dazu beitragen, den Drehbügel zuverlässig, insbesondere möglichst spielfrei, in einer Drehbügelaufnahme des Schlosskörpers, in welcher der Drehbügel zumindest teilweise aufgenommen und verstellbar gelagert ist, zu führen. Insbesondere wenn das Spritzgießteil den Drehbügel zumindest ein wenig über das Maß, um dass die Stege von der Einlage vorstehen, hinaus verbreitert, kann ein direkter Kontakt der Stege mit einer Innenwand der Drehbügelaufnahme vermieden werden, so dass der Drehbügel vorzugsweise ausschließlich mit dem Spritzgießteil an der Innenwand entlanggleitet und dadurch besonders zuverlässig geführt wird. Eine zumindest weitgehend spielfreie Führung des Drehbügels in der Drehbügelaufnahme trägt auch dazu bei, Klappergeräusche zu unterbinden, die ansonsten insbesondere während einer Fahrt mit dem Zweirad auftreten können.

Bei einer Ausführungsform, bei der die Sperrstruktur zwei, insbesondere in dieselbe Richtung, von der Einlage vorstehende Stege umfasst, ist es ferner bevorzugt, wenn das Spritzgießteil in dem durch die zwei Stege begrenzten Abschnitt der Längserstreckung des Drehbügels die Einlage in Umfangsrichtung um den Verlauf der Kreisbahn vollständig umschließt, sich also innerhalb dieses Abschnitts durchgehend vollumfänglich um die Einlage herum erstreckt.

Gemäß einer weiteren vorteilhaften Ausführungsform weist das Spritzgießteil in einem entlang des Verlaufs der Kreisbahn an den Anschlagabschnitt angrenzenden Bereich eine Aussparung auf, in die der Riegel eingreift, wenn er den Anschlagabschnitt hintergreift - also insbesondere dann, wenn sich der Drehbügel in seiner Geschlossenstellung befindet und sich der Riegel in seiner Verriegelungsstellung befindet. Wenn die Sperrstruktur des Drehbügels mehrere Anschlagabschnitte aufweist, kann für den jeweiligen Anschlagabschnitt Entsprechendes gelten. Das Spritzgießteil weist dann also in entlang des Verlaufs der Kreisbahn an einen jeweiligen Anschlagabschnitt angrenzenden Bereichen jeweils eine weitere Aussparung auf, in die der Riegel eingreift, wenn er den jeweiligen Anschlagabschnitt hintergreift - also dann, wenn sich der Drehbügel in einer jeweiligen zu sperrenden Stellung, beispielsweise der Offenstellung, befindet und sich der Riegel in seiner Verriegelungsstellung befindet.

Das Vorsehen der Aussparung kann dazu beitragen, dass der Riegel und der jeweilige Anschlagabschnitt, der vorzugsweise an der Einlage ausgebildet ist, trotz des Umspritzens der Einlage zuverlässig sperrend, insbesondere mit direktem Kontakt zueinander, zusammenwirken können. Die Aussparung kann insbesondere dadurch ausgebildet sein, dass in dem Spritzgießwerkzeug ein der Aussparung entsprechender Raum durch einen Platzhalter ausgefüllt wird. Da die Aussparung vorzugsweise unmittelbar an einen jeweiligen, an der Einlage ausgebildeten Anschlagabschnitt angrenzend vorgesehen wird, kann der Platzhalter zugleich der Lagerung der Einlage in dem Spritzgießwerkzeug beim Umspritzen dienen.

In Abschnitten der Längserstreckung des Drehbügels, in denen das Spritzgießteil keine Aussparung aufweist, insbesondere in allen Abschnitten, in denen das Spritzgießteil die Einlage in Umfangsrichtung um den Verlauf der Kreisbahn vollständig umschließt, weist das Spritzgießteil vorzugsweise einen konstanten, insbesondere rechteckigen oder kreisrunden, Querschnitt quer zum Verlauf der Kreisbahn auf.

Gemäß einer weiteren vorteilhaften Ausführungsform weist der Drehbügel einen Blockierabschnitt auf, der in der Geschlossenstellung des Drehbügels außerhalb des Schlosskörpers angeordnet ist, wobei sich das Spritzgießteil längs der Kreisbahn über den gesamten Blockierabschnitt erstreckt und innerhalb des Blockierabschnitts einen konstanten, insbesondere rechteckigen oder kreisrunden, Querschnitt aufweist. Der Querschnitt ist dabei quer zum Verlauf der Kreisbahn definiert. Bei dem Blockierabschnitt handelt es sich also um denjenigen Abschnitt des Drehbügels, der in der Geschlossenstellung des Drehbügels außerhalb des Schlosskörpers angeordnet ist und der somit sperrend mit dem Rad des Zweirads zusammenwirken kann.

Außerhalb dieses Blockierabschnitts, insbesondere außerhalb aller Abschnitte, in denen das Spritzgießteil den konstanten Querschnitt aufweist, erstreckt sich das Spritzgießteil im Querschnitt vorzugsweise nicht über eine Außenkontur dieses konstanten Querschnitts hinaus. Insbesondere kann das Spritzgießteil insgesamt im Wesentlichen den genannten konstanten Querschnitt aufweisen und nur in einigen Abschnitten davon abweichen, indem es in diesen Abschnitten einen demgegenüber, insbesondere durch Aussparungen, reduzierten Querschnitt aufweist.

Gemäß einer weiteren vorteilhaften Ausführungsform umfasst die Einlage einen elektrischen Leiter. Alternativ oder zusätzlich dazu kann die Einlage auch einen optischen Leiter umfassen. Somit kann bei einer solchen Ausführungsform ein Strom (in Form eines elektrischen Stroms bzw. eines optischen Signals) durch die Einlage fließen. Das ermöglicht es, eine Stärke des Stroms bzw. einen Widerstand des Leiters zu erfassen. Dabei kann sich ein solches Erfassen darauf beschränken, festzustellen, ob überhaupt ein Strom fließen kann bzw. ob die Leitung unterbrochen ist (und somit einen unendlich großen Widerstand aufweist) oder nicht. Diese Information kann dann dazu genutzt werden, die mechanische Integrität des Drehbügels zu überwachen, da eine Beeinträchtigung des jeweiligen Leiters darauf schließen lässt, dass auch die mechanische Integrität des Drehbügels, beispielsweise aufgrund eines Aufbruchsversuchs, beeinträchtigt wurde.

Bei derartigen Ausführungsformen ist es ferner vorteilhaft, wenn das Rahmenschloss eine Alarmvorrichtung umfasst, die dazu ausgebildet ist, den Leiter im Hinblick auf eine Beeinträchtigung, insbesondere im Hinblick auf eine Reduzierung eines Stroms durch den Leiter, eine Erhöhung eines Widerstands des Leiters oder eine vollständige Unterbrechung des Leiters, zu überwachen und im Falle eines Vorliegens einer Beeinträchtigung einen Alarm auszugeben. Bei dem Alarm kann es sich insbesondere um ein in einem weiten Umkreis deutlich wahrnehmbares Signal, insbesondere um ein optisches und/oder akustisches Alarmsignal handeln. Alternativ oder zusätzlich kann das Ausgeben des Alarms auch umfassen, dass, etwa über Mobilfunk oder eine sonstige vorzugsweise drahtlose Übertragungstechnik, eine Alarmmitteilung an einen entfernten Empfänger, beispielsweise das Mobiltelefon eines Besitzers des jeweiligen Zweirads, ausgesendet wird.

Gemäß einer weiteren vorteilhaften Ausführungsform weist das Spritzgießteil an einem Ende der Längserstreckung des Drehbügels eine Kopplungsstruktur auf, wobei der Drehbügel dazu ausgebildet ist, mittels dieser Kopplungsstruktur über eine Zugfeder mit dem Schlosskörper gekoppelt zu werden. Der Drehbügel kann sich längs der genannten Kreisbahn insbesondere zwischen einem freien Ende, mit dem voran der Drehbügel je nach seiner jeweiligen Stellung aus dem Schlosskörper herausragen kann, und einem gekoppelten Ende erstrecken, das in jeder Stellung des Drehbügels innerhalb des Schlosskörpers angeordnet ist und über das der Drehbügel mit dem Schlosskörper gekoppelt ist, so dass er nicht vollständig aus dem Schlosskörper entnommen werden kann. Diese Kopplung erfolgt vorzugsweise über eine Zugfeder, welche den Drehbügel relativ zu dem Schlosskörper in seine Offenstellung vorspannt und dazu mit dem gekoppelten Ende des Drehbügels verbunden ist. Bei der vorliegenden Ausführungsform kann diese Verbindung über die genannte, an diesem Ende ausgebildete Kopplungsstruktur des Spritzgießteils erfolgen. Die Kopplungsstruktur kann dabei insbesondere in Form eines Hakens ausgebildet sein, der an dem Spritzgießteil angeformt sein kann und an dem die Zugfeder dann eingehängt werden kann. Grundsätzlich kommen aber auch andere Formen für die Kopplungsstruktur in Betracht, welche eine Befestigung der Zugfeder an dem Ende des Drehbügels ermöglichen.

Das erfindungsgemäße Verfahren dient der Ausbildung eines Drehbügels für ein Rahmenschloss, insbesondere für ein erfindungsgemäßes Rahmenschloss, das auf eine der vorstehend beschriebenen Weisen ausgebildet sein kann, und umfasst: Bereitstellen einer Einlage, insbesondere aus Metall und/oder Keramik, die eine sich längs einer Kreisbahn erstreckende Kreisbogenform aufweist und an der eine Sperrstruktur mit einem, insbesondere senkrecht zum Verlauf der Kreisbahn ausgerichteten, Anschlagabschnitt ausgebildet ist; sowie Umspritzen der Einlage mit einem Kunststoff zur Ausbildung eines Spritzgießteils mit Einlage, welches den Drehbügel bildet.

Dabei kann die Einlage insbesondere durch einen Metalldraht, beispielsweise durch einen Stahldraht, vorzugsweise Federstahldraht, gebildet werden. In diesem Fall umfasst das Bereitstellen der Einlage vorzugsweise: Biegen des Metalldrahts in eine sich längs einer Kreisbahn erstreckende Kreisbogenform; sowie Ausbilden einer Sperrstruktur mit einem, insbesondere senkrecht zum Verlauf der Kreisbahn ausgerichteten, Anschlagabschnitt in dem Metalldraht. Insofern umfasst das erfahrungsgemäße Verfahren gemäß einer vorteilhaften Ausführungsform: Biegen des Metalldrahts in eine sich längs einer Kreisbahn erstreckende Kreisbogenform; Ausbilden einer Sperrstruktur mit einem, insbesondere senkrecht zum Verlauf der Kreisbahn ausgerichteten, Anschlagabschnitt in dem Metalldraht; sowie Umspritzen der Einlage mit einem Kunststoff zur Ausbildung eines Spritzgießteils mit Einlage, welches den Drehbügel bildet.

Das Verfahren ist dabei nicht darauf eingeschränkt, dass das Biegen des Metalldrahts und das Ausbilden der Sperrstruktur in der genannten Reihenfolge erfolgen. Vielmehr kann auch zunächst die Sperrstruktur in dem Metalldraht ausgebildet werden und erst anschließend der Metalldraht in die Kreisbogenform gebogen werden.

Das Ausbilden der Sperrstruktur umfasst gemäß einer weiteren vorteilhaften Ausführungsform das Ausbilden eines von dem Metalldraht vorstehenden Stegs, an dem der Anschlagabschnitt ausgebildet ist, durch Kaltumformung. Dabei können auf diese Weise auch mehrere von dem Metalldraht vorstehende Stege an dem Metalldraht ausgebildet werden. Das Ausbilden eines jeweiligen Stegs kann beispielsweise dadurch erfolgen, dass in einem Abschnitt der Längserstreckung des Metalldrahts, dessen Länge (d. h. Ausdehnung entlang der Längserstreckung) der Länge des auszubildenden Stegs entspricht, ein in eine zur Längserstreckung senkrechte erste Querrichtung weisender Teilbereich des Abschnitts aus einer bezüglich einer zur Längserstreckung und zur ersten Querrichtung senkrechten zweiten Querrichtung sowie aus einer dazu entgegengesetzten Richtung z. B. zwischen einem Stempel und einem Auflager eingeklemmt und gepresst wird, so dass zwei Ausnehmungen in den Metalldraht eingepresst werden und das dadurch verdrängte Material zu einem zwischen den zwei Ausnehmungen in die erste Querrichtung von dem Metalldraht vorstehenden Steg umgeformt wird.

Unabhängig von der Art der Einlage und der Ausbildung der Sperrstruktur ist gemäß einer weiteren Ausführungsform des Verfahrens vorzugsweise vorgesehen, dass bei dem Umspritzen ein entlang des Verlaufs der Kreisbahn an den Anschlagabschnitt angrenzender Bereich ausgespart wird, so dass das Spritzgießteil in diesem Bereich eine Aussparung aufweist, in die ein Riegel des Rahmenschlosses eingreifen kann, um den Anschlagabschnitt, insbesondere mit zumindest der Möglichkeit eines direkten Kontakts zum Anschlagabschnitt, zu hintergreifen.

Die Ausbildung des Drehbügels als Spritzgießteil mit Einlage durch Umspritzen der Einlage mit dem Kunststoff ermöglicht es, dem Drehbügel auf einfache Weise eine präzise definierte äußere Form zu geben. Zugleich lassen sich dabei zusätzliche Strukturen wie die genannten Aussparungen einbringen, welche die Funktion des Drehbügels unterstützen. Durch die Aussparungen können insbesondere ein oder mehrere an der Einlage ausgebildete Anschlagabschnitte für das Hintergreifen durch den Riegel freigelegt sein, wohingegen die Einlage ansonsten vorzugsweise zumindest weitgehend von dem Spritzgießteil nach außen vollständig überdeckt ist. Auf diese Weise kann das Spritzgießteil auch einen Schutz für die Einlage darstellen, durch den beispielsweise die gegebenenfalls metallische Einlage zusätzlich vor Korrosion geschützt sein kann.

Im Folgenden wird die Erfindung lediglich beispielhaft anhand der Figuren weiter erläutert.
- Fig. 1: zeigt eine Ausführungsform eines erfindungsgemäßen Rahmenschlosses in perspektivischer Darstellung.
- Fig. 2: zeigt den Drehbügel eines erfindungsgemäßen Rahmenschlosses in perspektivischer Darstellung.
- Fig. 3: zeigt einen Ausschnitt des in Fig. 2 gezeigten Drehbügels zusammen mit einem Riegel des Rahmenschlosses.
- Fig. 4: zeigt den Drehbügel einer alternativen Ausführungsform eines erfindungsgemäßen Rahmenschlosses.

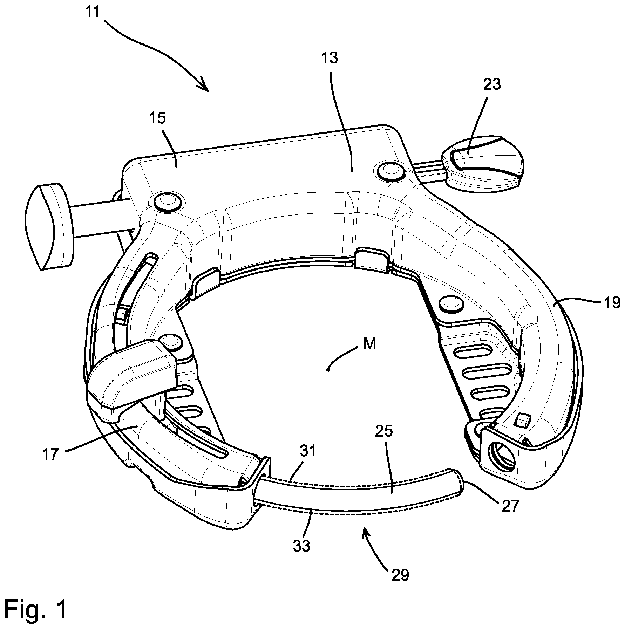

In Fig. 1 ist eine Ausführungsform eines erfindungsgemäßen Rahmenschlosses 11 dargestellt. Das Rahmenschloss 11 umfasst einen Schlosskörper 13 mit einem Gehäuse 15, das zumindest im Wesentlichen C-förmig ausgebildet ist, wobei ein mittlerer Abschnitt der C-Form quaderförmig verbreitert ist und die beiden übrigen Abschnitte einen ersten Schenkel 17 und einen zweiten Schenkel 19 des Schlosskörpers 13 bilden, die sich aus Ecken der Quaderform heraus erstrecken.

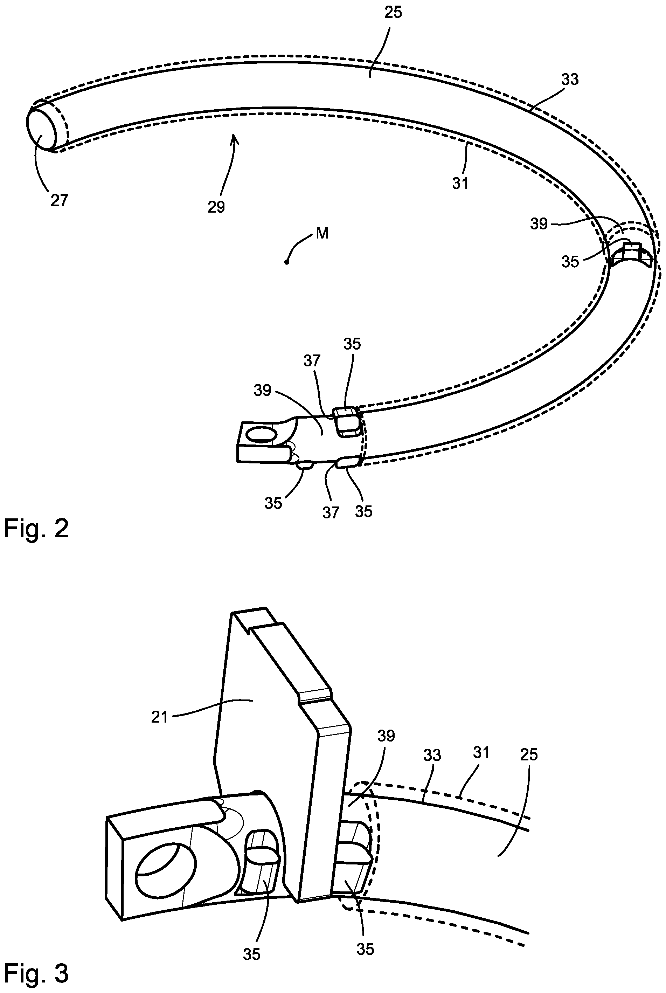

In dem mittleren Abschnitt sind eine nicht sichtbare Schließeinrichtung in Form eines Schließzylinders sowie ein mit der Schließeinrichtung gekoppelter Riegel 21 (vgl. Fig. 3) aufgenommen. Die Schließeinrichtung lässt sich nur mittels eines der Schließeinrichtung zugeordneten Schlüssels 23 regulär betätigen. Der Riegel 21 ist dabei derart mit der Schließeinrichtung gekoppelt, dass er durch eine Betätigung der Schließeinrichtung mittels des Schlüssels 23 zwischen einer Entriegelungsstellung und der in Fig. 3 gezeigten Verriegelungsstellung verstellbar ist. Insbesondere besteht dabei ein eindeutiger Zusammenhang zwischen der jeweiligen Stellung des Riegels 21 und der jeweiligen Drehstellung des Schlüssels 23.

Das Rahmenschloss 11 weist ferner einen Drehbügel 25 auf, der sich längs einer Kreisbahn erstreckt und dadurch einen kreisbogenförmigen Verlauf aufweist. Längs der Kreisbahn erstreckt sich der Drehbügel 25 dabei über einen Winkelbereich von etwa 225°. Der Drehbügel 25 ist zumindest teilweise in dem Gehäuse 15 aufgenommen, nämlich in einer Drehbügelaufnahme, die sich durch den ersten Schenkel 17 sowie in den quaderförmigen mittleren Abschnitt des Schlosskörpers 13 erstreckt. Der Drehbügel 25 ist dabei relativ zu dem Schlosskörper 13 derart gelagert, dass er entlang seiner Längserstreckung, also entlang der genannten Kreisbahn, zwischen einer Offenstellung und einer Geschlossenstellung verstellbar ist.

In der Geschlossenstellung ragt der Drehbügel 25 mit einem freien Ende 27 aus dem ersten Schenkel 17 heraus und erstreckt sich bis zum zweiten Schenkel 19 und mit dem freien Ende 27 in diesen hinein, so dass er die beiden Schenkel 17, 19 verbindet und der Schlosskörper 13 und der Drehbügel 25 dadurch einen geschlossenen Ring bilden. Auf diese Weise kann der Drehbügel 25 bei entsprechender Anordnung des Rahmenschlosses 11 an dem Rahmen eines Zweirads (nicht dargestellt) ein Rad des Zweirads zwischen dessen Speichen durchgreifen und das Rad somit gegen Drehung sperren.

In der Offenstellung dagegen ist der Drehbügel 25 zumindest im Wesentlichen vollständig innerhalb des Gehäuses 15 aufgenommen oder ragt nur geringfügig, insbesondere nur mit dem freien Ende 27, aus dem ersten Schenkel 17 des Gehäuses 15 heraus, so dass zwischen den beiden Schenkeln 17, 19 ein Freiraum verbleibt, innerhalb dessen die Speichen des Rades zwischen den Schenkeln 17, 19 des Rahmenschlosses 11 hindurch bewegt werden können. Somit gibt der Drehbügel 25 in seiner Offenstellung das Rad des Zweirads für eine Drehung frei.

Sofern der Drehbügel 25 nicht durch den Riegel 21 dagegen gesperrt ist, verstellt zu werden, kann der Drehbügel 25 aus der Offenstellung in die Geschlossenstellung und umgekehrt aus der Geschlossenstellung zurück in die Offenstellung entlang der Kreisbahn verstellt werden, was einer Drehung des Drehbügels 25 um einen Mittelpunkt M der genannten Kreisbahn entspricht. In Fig. 1 befindet sich der Drehbügel 25 in einer Zwischenstellung zwischen seiner Offenstellung und seiner Geschlossenstellung, die der Geschlossenstellung näher ist als der Offenstellung.

Der Abschnitt des Drehbügels 25, der in der Geschlossenstellung außerhalb des Gehäuses 15 angeordnet ist, bildet einen Blockierabschnitt 29 des Drehbügels 25. Der Blockierabschnitt 29 erstreckt sich längs der genannten Kreisbahn über einen Winkelbereich von etwa 60° bis 75°. In dem gesamten Blockierabschnitt 29 sowie in weiteren Abschnitten seiner Längserstreckung, die insgesamt zusammen mit dem Blockierabschnitt 25 über 90 % der Längserstreckung des Drehbügels 25 ausmachen, weist der Drehbügel 25 einen konstanten kreisrunden Querschnitt auf.

Der Drehbügel 25 ist als Spritzgießteil 31 aus einem Kunststoff mit einer Einlage 33 aus einem Metalldraht ausgebildet. Die Einlage 33 könnte als Material aber auch ein oder mehrere Keramikteile umfassen. Das Spritzgießteil 31 ist dadurch ausgebildet, dass die Einlage 33 mit dem Kunststoff umspritzt wurde. In den Figuren ist das Spritzgießteil 31, da es die Einlage 33 weitgehend verdeckt, transparent (durch unterbrochene Linien) dargestellt, damit die Ausbildung der Einlage 33 zu erkennen ist. Die Ausbildung des Drehbügels 25 lässt sich insbesondere anhand der Fig. 2 nachvollziehen, in der er separat dargestellt ist.

Das Spritzgießteil 31 erstreckt sich längs der Kreisbahn über nahezu die gesamte Längserstreckung der Einlage 33, die zugleich der Längserstreckung des Drehbügels 25 entspricht, insbesondere über zumindest 90 % dieser Längserstreckung. In dem Blockierabschnitt 29 sowie den genannten weiteren Abschnitten, in denen der Drehbügel 25 den konstanten kreisrunden Querschnitt aufweist, weist die Einlage 33 ebenfalls einen konstanten kreisrunden Querschnitt auf, dessen Radius kleiner als derjenige des konstanten kreisrunden Querschnitts des Drehbügels 25 ist. In diesen Abschnitt wird die Einlage 33 in Umfangsrichtung um den Verlauf der Kreisbahn vollständig von dem Spritzgießteil 31 umschlossen. Die kreisrunde Form des Querschnitts des Drehbügels 25 ergibt sich folglich aus einer im Querschnitt ebenfalls kreisrunden Außenkontur des Spritzgießteils 31 in diesen Abschnitten. Grundsätzlich kann der genannte konstante Querschnitt des Drehbügels 25 bzw. des Spritzgießteils 31 anstelle einer Kreisform auch eine andere Form, etwa die eines regelmäßigen Vielecks, aufweisen, die dann wiederum durch die Außenkontur des Spritzgießteils 31 definiert sein kann.

Um von dem Riegel 21 gegen ein Verstellen zwischen der Offenstellung und der Geschlossenstellung gesperrt werden zu können, weist der Drehbügel 25 eine Sperrstruktur auf, die mehrere an der Einlage 33 ausgebildete Stege 35 umfasst. Jeder dieser Stege 35 steht senkrecht zur Ebene der Kreisbahn von der Einlage 33 zumindest teilweise vor. Insbesondere stehen die Stege 35 dabei jeweils über den genannten kreisrunden Querschnitt der Einlage 33 vor, den insbesondere auch längs der Kreisbahn an den jeweiligen Steg 35 angrenzende Abschnitte des Drehbügels 25 aufweisen. Die Stege 35 erstrecken sich über eine Außenkontur dieses Querschnitts hinaus nach außen.

Die Stege 35 weisen jeweils zwei zueinander entgegengesetzte parallele Seitenflächen auf, die bezüglich des Mittelpunkts M der Kreisbahn radial nach außen bzw. nach innen weisend ausgerichtet sind und sich folglich im Wesentlichen tangential zur Kreisbahn erstrecken. Außerdem weisen die Stege 35 jeweils einen Anschlagabschnitt 37 auf, der durch eine Stirnseite des jeweiligen Stegs 35 gebildet wird, welche die beiden Seitenflächen verbindet, und zumindest im Wesentlichen senkrecht zum Verlauf der Kreisbahn ausgerichtet ist.

Der Riegel 21 und der Drehbügel 25 sind derart relativ zueinander angeordnet, dass sich der Riegel 21 in seiner Verriegelungsstellung zumindest teilweise in der Bewegungsbahn der Stege 35 befindet, welche die Stege 35 bei einem Verstellen des Drehbügels 25 entlang der Kreisbahn ungehindert durchlaufen würden (vgl. Fig. 3). Dadurch hintergreift der Riegel 21, wenn sich der Drehbügel 25 in seiner Geschlossenstellung oder in seiner Offenstellung befindet und sich der Riegel 21 in seiner Verriegelungsstellung befindet, den Anschlagabschnitt 37 des jeweiligen bezüglich der Verstellrichtung nächstliegenden Stegs 35. Wenn der Drehbügel 25 in diese Verstellrichtung verstellt wird, schlägt dieser Anschlagabschnitt 37 folglich an dem Riegel 21 an, so dass der Drehbügel 25 dadurch gegen ein weiteres Verstellen in diese Richtung gesperrt wird. In der Detaildarstellung der Fig. 3 ist dies beispielhaft für den Zustand dargestellt, in dem sich der Drehbügel 25 in seiner Geschlossenstellung befindet und sich der Riegel 21 in seiner Verriegelungsstellung befindet.

Damit der Riegel 21 den Anschlagabschnitt 37 eines jeweiligen Stegs 35 hintergreifen und dadurch bei einem Drehen des Drehbügels 25 in die zu sperrende Verstellrichtung möglichst unmittelbar an dem Anschlagabschnitt 37 anschlagen kann, um auf diese Weise das Drehen zu sperren, ist ein an den jeweiligen Steg 35 auf der Seite, an der der Anschlagabschnitt 37 ausgebildet ist, angrenzender Bereich der Einlage 33 nicht von dem Spritzgießteil 31 überdeckt. Vielmehr weist das Spritzgießteil 31 in solchen an einen jeweiligen Anschlagabschnitt 37 angrenzenden Bereichen eine jeweilige Aussparung 39 auf. Der Riegel 21 greift folglich in eine solche Aussparung 39 ein, wenn er den jeweiligen Anschlagabschnitt 37 hintergreift (vgl. Fig. 3).

Auf der dem Anschlagabschnitt 37 entgegengesetzten Seite eines jeweiligen Stegs 35 kann sich das Spritzgießteil 31 dagegen längs der Kreisbahn bis an den jeweiligen Steg 35 erstrecken, wie dies beispielsweise für die beiden in Fig. 2 nach oben von der Einlage 33 vorstehenden Stege 35 der Fall ist. Das Spritzgießteil 31 erstreckt sich somit über den gesamten durch die zwei Stege 35 begrenzten Abschnitt der Längserstreckung des Drehbügels 25, d. h. von dem einen der zwei in dieselbe Richtung von der Einlage 33 vorstehenden Stege 35 bis zu dem anderen. Von der Einlage 33 aus erstreckt sich das Spritzgießteil 31 in diese Richtung (sowie in alle anderen Richtungen senkrecht zum Verlauf der Kreisbahn) so weit, wie die zwei Stege 35 von der Einlage 33 vorstehen. Mit anderen Worten entspricht die Dicke des Spritzgießteils 31, um die der Drehbügel 25 in den Bereichen, in denen die Einlage 33 umspritzt wurde, verbreitert wird, zumindest im Wesentlichen dem Maß, um das die Stege 35 von der Einlage 33 vorstehen. Auf diese Weise ergibt sich ein zumindest im Wesentlichen bündiger Übergang zwischen dem Spritzgießteil 31 und der jeweiligen in die Richtung des Vorstehens weisenden Außenseite der beiden Stege 35. Ein solcher bündiger Übergang ergibt sich auch für einen der beiden weiteren Stege 35 (in Fig. 3 der rechte der zwei sichtbaren Stege 35), die im Vergleich zu den genannten zwei Stegen 35 in die entgegengesetzte Richtung (in Fig. 2 nach unten) von der Einlage 33 vorstehen. Grundsätzlich könnte das Spritzgießteil 31 auch eine größere Dicke aufweisen und sich bis über die Stege 35 erstrecken.

Bei der gezeigten Ausführungsform erstrecken sich die Aussparungen 39 in Umfangsrichtung um den Verlauf der genannten Kreisbahn jeweils vollständig um den Drehbügel 25 herum, so dass die Einlage 33 in dem entsprechenden Abschnitt der Längserstreckung des Drehbügels 25 vollständig freiliegt. Infolgedessen ist das Spritzgießteil 31 durch die in einem mittleren Bereich der Längserstreckung des Drehbügels 25 liegende Aussparung 39 in zwei separate Teile aufgeteilt. Vorzugsweise ist das Spritzgießteil 31 jedoch einteilig. Die Aussparungen 39 beschränken sich dann in Umfangsrichtung auf einen Bereich, in den der Riegel 21 eingreift (vgl. Fig. 3), während der übrige Teil des Umfangs von dem Spritzgießteil 31 überdeckt ist.

Die Einlage 33 ist ein elektrischer Leiter. Das kann genutzt werden, um in dem Rahmenschloss 11 eine Alarmvorrichtung (in den Figuren nicht zu sehen) vorzusehen, welche dazu ausgebildet ist, zu überwachen, ob irgendeine Beeinträchtigung der Einlage 33 in ihrer Funktion als elektrischer Leiter vorliegt, beispielsweise ob sich ein Widerstand der Einlage 33 geändert, insbesondere erhöht, hat oder sich ein Strom durch die Einlage 33 geändert, insbesondere verringert, hat. Dazu kann die Alarmvorrichtung selbst einen geringen Strom, zur Vermeidung eines übermäßigen Energieverbrauchs vorzugsweise gepulst, durch die Einlage 33 fließen lassen. Wird eine Beeinträchtigung festgestellt, kann dies ein Hinweis auf einen Aufbruchsversuch oder eine sonstige mechanische Beeinträchtigung des Drehbügels 25 sein. Die Alarmvorrichtung ist dazu ausgebildet, in einem solchen Fall einen Alarm in Form eines in der Umgebung des Rahmenschlosses 11 wahrnehmbaren Alarmsignals und/oder in Form einer an eine entfernte Stelle übertragbaren Alarmmitteilung auszugeben. Das Spritzgießteil 31 kann bei einer solchen Ausbildung auch als elektrische Isolierung für die Einlage 33 fungieren.

Durch die Ausbildung des Drehbügels 25 als Spritzgießteil 31 mit Einlage 33 weist der Drehbügel 25 über nahezu seine vollständige Längserstreckung einen besonders einheitlichen Querschnitt auf und kann aufgrund des Spritzgießteils 31 zudem eine besonders glatte Oberfläche aufweisen. Auf diese Weise können Fertigungstoleranzen bei der Herstellung der Einlage 33 durch das Spritzgießteil 31 ausgeglichen werden und der Drehbügel 25 dadurch insgesamt besonders zuverlässig in dem Schlosskörper 13 geführt gelagert sein. Zudem ergibt sich durch die Ausbildung des Drehbügels 25 als Spritzgießteil 31 mit Einlage 33 eine im Vergleich zur Ausbildung eines Drehbügels mit vergleichbaren Ausmaßen aus einem einzelnen massiven Metallteil eine vorteilhafte Gewichtsreduktion.

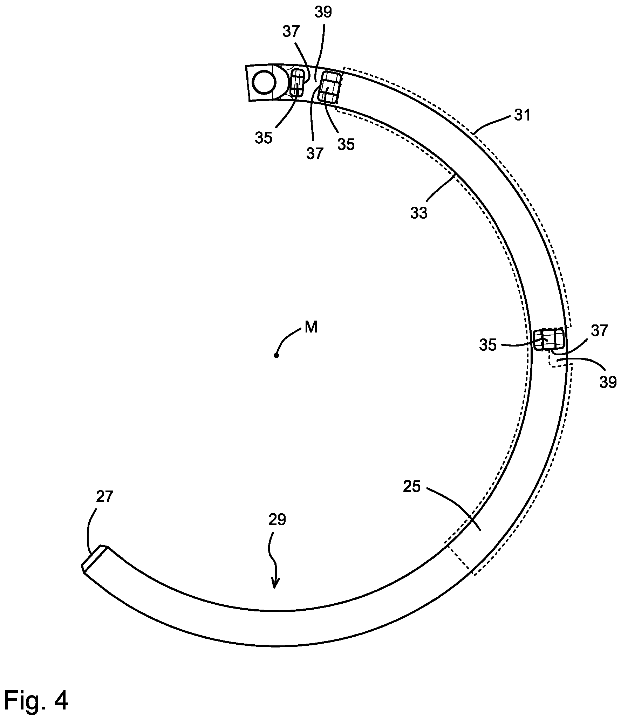

Der in Fig. 4 gezeigte Drehbügel 25 einer alternativen Ausführungsform des Rahmenschlosses 11 entspricht dem in Fig. 2 gezeigten Drehbügel 25 weitgehend. Der wesentliche Unterschied besteht darin, dass sich bei dem in Fig. 4 gezeigten Drehbügel 25 das Spritzgießteil 31 längs der Kreisbahn nicht auch in den Blockierabschnitt 29 erstreckt, sondern auf den Abschnitt der Längserstreckung des Drehbügels 25 beschränkt ist, der stets (also insbesondere auch in der Geschlossenstellung des Drehbügels 25) innerhalb des Schlosskörpers 13 angeordnet ist; und dass sich zumindest diejenige Aussparung 39 des Spritzgießteils 31, die an den Anschlagabschnitt 37 angrenzt, welcher in der Offenstellung des Drehbügels 25 von dem Riegel 21 hintergriffen werden kann, nicht vollständig um die Einlage 33 herum erstreckt und das Spritzgießteil 31 dadurch in zwei Teile teilt, sondern sich in Umfangsrichtung nur über einen Teil des Umfangs des Drehbügels 25 erstreckt, so dass das Spritzgießteil 31 einteilig ausgebildet ist.

Eine Besonderheit der in Fig. 4 gezeigten Ausführungsform ist dabei ferner, dass die genannte Aussparung 39 derart ausgebildet ist, dass sie die Verstellbarkeit des Riegels auf ein Verstellen zwischen der Entriegelungsstellung und einer Teilverriegelungsstellung beschränkt, die zwischen der Entriegelungsstellung und der Verriegelungsstellung liegt. Wie in Fig. 4 zu erkennen ist, erstreckt sich die Aussparung 39 im Umfangsrichtung nämlich nur bis über etwa die Hälfte der Anschlagfläche 37, an die sie angrenzt. Der übrige Teil der Anschlagfläche 37 ist dagegen durch das Spritzgießteil 31 überdeckt, wodurch der Riegel 21, wenn sich der Drehbügel 25 in seiner Offenstellung befindet, aus seiner Entriegelungsstellung nicht bis in die Verriegelungsstellung, sondern nur bis in die genannten Teilverriegelungsstellung verstellt werden kann. Allerdings hintergreift der Riegel 21 in dieser Teilverriegelungsstellung bereits einen Teil der Anschlagfläche 37, so dass der Drehbügel 25 in seiner Offenstellung gleichwohl mittels des Riegel 21 gesperrt werden kann.

Eine solche Beschränkung der Verstellbarkeit des Riegels 21 durch das Spritzgießteil 31, insbesondere durch entsprechende Ausbildung der darin ausgebildeten Aussparung 39, kann etwa dann zweckmäßig sein, wenn das Rahmenschloss 11 eine in dem Schlosskörper 13 aufgenommene Schließeinrichtung, insbesondere einen Schließzylinder, umfasst, die mittels eines der Schließeinrichtung zugeordneten Schlüssels 23 betätigbar ist und, beispielsweise über einen Mitnehmer, derart zum Verstellen des Riegels 21 mit diesem gekoppelt ist, dass ein (von möglichem Spiel abgesehen) eindeutiger Zusammenhang zwischen einer jeweiligen Drehstellung des Schlüssels 23 und einer jeweiligen Stellung des Riegels 21 besteht, wobei der Schlüssel 23 von der Schließeinrichtung nur dann abgezogen werden kann, wenn er sich in einer der Verriegelungsstellung des Riegels 21 entsprechenden Drehstellung befindet. Wenn (wie etwa bei der in Fig. 3 gezeigten Ausführungsform) die Verstellbarkeit des Riegels 21 nicht beschränkt ist, kann also sowohl in der Geschlossenstellung als auch in der Offenstellung des Drehbügels 25 der Riegel 21 in seine Verriegelungsstellung verstellt und der Schlüssel 23 somit abgezogen werden. Durch die erläuterte, die Verstellbarkeit des Riegels 21 beschränkende Ausbildung des Spritzgießteils 31 bzw. der Aussparung 39 des Spritzgießteils 31 kann jedoch erreicht werden, dass - bei ansonsten gleicher Funktionalität des Rahmenschlosses 11 - der Riegel 21 nur noch in der Geschlossenstellung, nicht jedoch in der Offenstellung des Drehbügels 25 in die Verriegelungsstellung verstellt werden kann und der Schlüssel 23 daher nur abgezogen werden kann, wenn der Drehbügel 25 in seiner Geschlossenstellung durch den Riegel 21 verriegelt ist. Dies entspricht einer sogenannten Key-Retaining-Funktion des Rahmenschlosses 11, die speziell in einigen europäischen Ländern nachgefragt ist.

Da die Form des Spritzgießteils 31 und somit auch die Form darin vorgesehener Aussparungen 39 vergleichsweise frei definiert werden kann, lässt sich die Key-Retaining-Funktion bei einem erfindungsgemäßen Rahmenschloss 11 auf vergleichsweise einfache Weise verwirklichen. Dieses Beispiel zeigt, dass die Ausbildung des Drehbügels 25 als Spritzgießteil 31 mit einer Einlage 33 auch im Hinblick auf spezielle Funktionalitäten des Drehbügels 25 vorteilhaft sein kann.

### Bezugszeichen

- 11: Rahmenschloss
- 13: Schlosskörper
- 15: Gehäuse
- 17: erster Schenkel
- 19: zweiter Schenkel
- 21: Riegel
- 23: Schlüssel
- 25: Drehbügel
- 27: freies Ende
- 29: Blockierabschnitt
- 31: Spritzgießteil
- 33: Einlage
- 35: Steg
- 37: Anschlagabschnitt
- 39: Aussparung
- M: Mittelpunkt

## Patentansprüche

1. Rahmenschloss (11) für ein Zweirad mit einem Schlosskörper (13), der einen Riegel (21) umfasst, sowie mit einem Drehbügel (25), der sich längs einer Kreisbahn erstreckt und relativ zu dem Schlosskörper (13) entlang der Kreisbahn zwischen einer Offenstellung, in der er ein Rad des Zweirads für eine Drehung freigibt, und einer Geschlossenstellung, in der er das Rad gegen Drehung sperrt, verstellbar ist,
wobei der Drehbügel (25) eine Sperrstruktur mit einem Anschlagabschnitt (37) aufweist,
wobei der Riegel (21) zwischen einer Entriegelungsstellung und einer Verriegelungsstellung verstellbar ist,
und wobei der Riegel (21), wenn sich der Drehbügel (25) in seiner Geschlossenstellung befindet und sich der Riegel (21) in seiner Verriegelungsstellung befindet, den Anschlagabschnitt (37) hintergreift und den Drehbügel (25) dadurch gegen ein Verstellen in die Offenstellung sperrt,
**dadurch gekennzeichnet,**
**dass** der Drehbügel (25) als Spritzgießteil (31) aus einem Kunststoff mit einer Einlage (33) aus einem anderen Material mit im Vergleich zu dem Kunststoff größerer Festigkeit und/oder Härte ausgebildet ist.

2. Rahmenschloss nach Anspruch 1,
wobei die Einlage (33) ein oder mehrere Metallteile, insbesondere aus gehärtetem Metall und/oder aus Metalldraht, umfasst.

3. Rahmenschloss nach Anspruch 1 oder 2,
wobei die Einlage (33) ein oder mehrere Keramikteile umfasst.

4. Rahmenschloss nach einem der vorstehenden Ansprüche,
wobei die Einlage (33) den Anschlagabschnitt (37) aufweist.

5. Rahmenschloss nach einem der vorstehenden Ansprüche,
wobei die Sperrstruktur zumindest einen von der Einlage (33) in eine Richtung vorstehenden Steg (35) umfasst, der den Anschlagabschnitt (37) aufweist,
und wobei sich das Spritzgießteil (31) in einem an den Steg (35) entlang der Kreisbahn angrenzenden Abschnitt der Längserstreckung des Drehbügels (25) von der Einlage (33) aus zumindest so weit in die genannte Richtung erstreckt, wie der Steg (35) von der Einlage (33) vorsteht.

6. Rahmenschloss nach Anspruch 5,
wobei die Sperrstruktur zumindest zwei von der Einlage (33) in dieselbe Richtung vorstehende Stege (35) umfasst, die jeweils einen Anschlagabschnitt (37) aufweisen,
und wobei sich das Spritzgießteil (31) von dem einen der zwei Stege (35) längs der Kreisbahn bis zu dem anderen erstreckt und sich dabei in einem durch die zwei Stege (35) begrenzten Abschnitt der Längserstreckung des Drehbügels (25) von der Einlage (33) aus zumindest so weit in die genannte Richtung erstreckt, wie die zwei Stege (35) von der Einlage (33) vorstehen.

7. Rahmenschloss nach einem der vorstehenden Ansprüche,
wobei das Spritzgießteil (31) in einem entlang des Verlaufs der Kreisbahn an den Anschlagabschnitt (37) angrenzenden Bereich eine Aussparung (39) aufweist, in die der Riegel (21) eingreift, wenn er den Anschlagabschnitt (37) hintergreift.

8. Rahmenschloss nach einem der vorstehenden Ansprüche,
wobei der Drehbügel (25) einen Blockierabschnitt (29) aufweist, der in der Geschlossenstellung des Drehbügels (25) außerhalb des Schlosskörpers (13) angeordnet ist,
wobei sich das Spritzgießteil (31) längs der Kreisbahn über den gesamten Blockierabschnitt (29) erstreckt,
und wobei das Spritzgießteil (31) innerhalb des Blockierabschnitts (29) einen konstanten, insbesondere kreisrunden, Querschnitt aufweist und sich außerhalb des Blockierabschnitts (29) im Querschnitt vorzugsweise nicht über eine Außenkontur dieses konstanten Querschnitts hinaus erstreckt.

9. Rahmenschloss nach einem der vorstehenden Ansprüche,
wobei die Einlage (33) einen elektrischen Leiter und/oder einen optischen Leiter umfasst.

10. Rahmenschloss nach Anspruch 9,
wobei das Rahmenschloss (11) eine Alarmvorrichtung umfasst, die dazu ausgebildet ist, den Leiter im Hinblick auf eine Beeinträchtigung zu überwachen und im Falle eines Vorliegens einer Beeinträchtigung einen Alarm auszugeben.

11. Rahmenschloss nach einem der vorstehenden Ansprüche,
wobei das Spritzgießteil (31) an einem Ende der Längserstreckung des Drehbügels (25) eine Kopplungsstruktur, insbesondere in Form eines Hakens, aufweist und der Drehbügel (25) dazu ausgebildet ist, mittels der Kopplungsstruktur über eine Zugfeder mit dem Schlosskörper (13) gekoppelt zu werden.

12. Verfahren zur Ausbildung eines Drehbügels (25) für ein Rahmenschloss nach einem der vorstehenden Ansprüche, wobei das Verfahren umfasst:
- Bereitstellen einer Einlage (33), insbesondere aus Metall und/oder Keramik, die eine sich längs einer Kreisbahn erstreckende Kreisbogenform aufweist und an der eine Sperrstruktur mit einem, insbesondere senkrecht zum Verlauf der Kreisbahn ausgerichteten, Anschlagabschnitt (37) ausgebildet ist; sowie
- Umspritzen der Einlage (33) mit einem Kunststoff zur Ausbildung eines Spritzgießteils (31) mit Einlage (33), welches den Drehbügel (25) bildet.

13. Verfahren nach Anspruch 12,
wobei die Einlage (33) durch einen Metalldraht gebildet wird,
wobei das Bereitstellen der Einlage (33) umfasst:
- Biegen des Metalldrahts in eine sich längs einer Kreisbahn erstreckende Kreisbogenform; sowie
- Ausbilden einer Sperrstruktur mit einem, insbesondere senkrecht zum Verlauf der Kreisbahn ausgerichteten, Anschlagabschnitt (37) in dem Metalldraht.

14. Verfahren nach Anspruch 13,
wobei das Ausbilden der Sperrstruktur umfasst:
- Ausbilden eines von dem Metalldraht vorstehenden Stegs (35), an dem der Anschlagabschnitt (37) ausgebildet ist, durch Kaltumformung.

15. Verfahren nach einem der Ansprüche 12 bis 14,
wobei bei dem Umspritzen ein entlang des Verlaufs der Kreisbahn an den Anschlagabschnitt (37) angrenzender Bereich ausgespart wird, so dass das Spritzgießteil (31) in diesem Bereich eine Aussparung (39) aufweist, in die ein Riegel (21) des Rahmenschlosses (11) eingreifen kann, um den Anschlagabschnitt (37) zu hintergreifen.

## Claims

1. A frame lock (11) for a two-wheeler, said frame lock (11) comprising a lock body (13), which comprises a latch (21), and a rotary hoop (25) which extends along a circular path and which is adjustable relative to the lock body (13) along the circular path between an open position, in which said rotary hoop (25) releases a wheel of the two-wheeler for a rotation, and a closed position in which said rotary hoop (25) blocks the wheel against rotation,
wherein the rotary hoop (25) has a blocking structure comprising an abutment section (37),
wherein the latch (21) is adjustable between an unlocked position and a locked position,
and wherein, when the rotary hoop (25) is in its closed position and the latch (21) is in its locked position, the latch (21) engages behind the abutment section (37) and thereby blocks the rotary hoop (25) against an adjustment into the open position,
**characterized in that**
the rotary hoop (25) is configured as an injection molded part (31) composed of a plastic with an insert (33) composed of a different material that has a greater strength and/or hardness compared to the plastic.

2. A frame lock according to claim 1,
wherein the insert (33) comprises one or more metal parts, in particular composed of a hardened metal and/or of a metal wire.

3. A frame lock according to claim 1 or 2,
wherein the insert (33) comprises one or more ceramic parts.

4. A frame lock according to any one of the preceding claims,
wherein the insert (33) has the abutment section (37).

5. A frame lock according to any one of the preceding claims,
wherein the blocking structure comprises at least one web (35) which projects from the insert (33) in a direction and which has the abutment section (37),
and wherein the injection molded part (31) extends from the insert (33) in a section of the longitudinal extent of the rotary hoop (25) adjoining the web (35) along the circular path at least as far in said direction as the web (35) projects from the insert (33).

6. A frame lock according to claim 5,
wherein the blocking structure comprises at least two webs (35) which project from the insert (33) in the same direction and which each have an abutment section (37),
and wherein the injection molded part (31) extends from the one of the two webs (35) along the circular path up to the other web and, in a section of the longitudinal extent of the rotary hoop (25) that is bounded by the two webs (35), in this respect extends from the insert (33) at least as far in said direction as the two webs (35) project from the insert (33).

7. A frame lock according to any one of the preceding claims,
wherein the injection molded part (31) has a recess (39), into which the latch (21) engages when said latch (21) engages behind the abutment section (37), in a region adjoining the abutment section (37) along the course of the circular path.

8. A frame lock according to any one of the preceding claims,
wherein the rotary hoop (25) has a blocking section (29) which is arranged outside the lock body (13) in the closed position of the rotary hoop (25),
wherein the injection molded part (31) extends along the circular path over the entire blocking section (29),
and wherein the injection molded part (31) has a constant cross-section, in particular a circular cross-section, within the blocking section (29) and, outside the blocking section (29), preferably does not extend in cross-section beyond an outer contour of this constant cross-section.

9. A frame lock according to any one of the preceding claims,
wherein the insert (33) comprises an electrical conductor and/or an optical conductor.

10. A frame lock according to claim 9,
wherein the frame lock (11) comprises an alarm apparatus which is configured to monitor the conductor with respect to an impairment and to output an alarm if an impairment is present.

11. A frame lock according to any one of the preceding claims,
wherein the injection molded part (31) has a coupling structure, in particular in the form of a hook, at one end of the longitudinal extent of the rotary hoop (25) and the rotary hoop (25) is configured to be coupled to the lock body (13) by means of the coupling structure via a tension spring.

12. A method of forming a rotary hoop (25) for a frame lock according to any one of the preceding claims, wherein the method comprises:
- providing an insert (33), in particular composed of metal and/or a ceramic material, that has an arcuate shape which extends along a circular path and at which a blocking structure is formed, said blocking structure comprising an abutment section (37) which is in particular oriented perpendicular to the course of the circular path; and
- overmolding the insert (33) with a plastic to form an injection molded part (31) with an insert (33), said injection molded part (31) forming the rotary hoop (25).

13. A method according to claim 12,
wherein the insert (33) is formed by a metal wire,
wherein the provision of the insert (33) comprises:
- bending the metal wire into an arc shape extending along a circular path; and
- forming a blocking structure comprising an abutment section (37), which is in particular oriented perpendicular to the course of the circular path, in the metal wire.

14. A method according to claim 13,
wherein the formation of the blocking structure comprises:
- forming a web (35), which projects from the metal wire and at which the abutment section (37) is formed, by cold forming.

15. A method according to any one of the claims 12 to 14,
wherein a region adjoining the abutment section (37) along the course of the circular path is recessed during the overmolding so that the injection molded part (31) has a recess (39) in this region, into which recess (39) a latch (21) of the frame lock (11) can engage in order to engage behind the abutment section (37).

## Revendications

1. Antivol de cadre (11) pour un deux-roues, comprenant un corps d'antivol (13) muni d'un verrou (21), ainsi qu'un étrier rotatif (25) qui s'étend le long d'une trajectoire circulaire et qui peut être déplacé par rapport au corps d'antivol (13) le long de la trajectoire circulaire entre une position ouverte, dans laquelle il libère une roue du deux-roues pour une rotation, et une position fermée, dans laquelle il bloque la roue à l'encontre d'une rotation, dans lequel
l'étrier rotatif (25) présente une structure de blocage ayant une portion de butée (37),
le verrou (21) peut être déplacé entre une position déverrouillée et une position verrouillée,
et, lorsque l'étrier rotatif (25) se trouve dans sa position fermée et que le verrou (21) se trouve dans sa position verrouillée, le verrou (21) engage par l'arrière la portion de butée (37) et bloque ainsi l'étrier rotatif (25) à l'encontre d'un déplacement vers la position ouverte,
**caractérisé en ce que**
l'étrier rotatif (25) est réalisé sous la forme d'une pièce moulée par injection (31) en une matière plastique, avec un insert (33) en un autre matériau qui présente une résistance et/ou une dureté plus élevée par comparaison à la matière plastique.

2. Antivol de cadre selon la revendication 1,
dans lequel l'insert (33) comprend une ou plusieurs pièces métalliques, en particulier en métal trempé et/ou en fil métallique.

3. Antivol de cadre selon la revendication 1 ou 2,
dans lequel l'insert (33) comprend une ou plusieurs pièces en céramique.

4. Antivol de cadre selon l'une des revendications précédentes,
dans lequel l'insert (33) comprend la portion de butée (37).

5. Antivol de cadre selon l'une des revendications précédentes,
dans lequel la structure de blocage comprend au moins une nervure (35) qui fait saillie de l'insert (33) dans une direction et qui comprend la portion de butée (37),
et, dans une portion de l'extension longitudinale de l'étrier rotatif (25) adjacente à la nervure (35) le long de la trajectoire circulaire, la pièce moulée par injection (31) s'étend depuis l'insert (33) au moins aussi loin dans ladite direction que la nervure (35) fait saillie de l'insert (33).

6. Antivol de cadre selon la revendication 5,
dans lequel la structure de blocage comprend au moins deux nervures (35) qui font saillie de l'insert (33) dans la même direction et qui présentent chacune une portion de butée (37),
et la pièce moulée par injection (31) s'étend depuis l'une des deux nervures (35) le long de la trajectoire circulaire jusqu'à l'autre nervure, et, dans une portion, délimitée par les deux nervures (35), de l'extension longitudinale de l'étrier rotatif (25), elle s'étend depuis l'insert (33) au moins aussi loin dans ladite direction que les deux nervures (35) font saillie de l'insert (33).

7. Antivol de cadre selon l'une des revendications précédentes,
dans lequel, dans une zone adjacente à la portion de butée (37) le long du tracé de la trajectoire circulaire, la pièce moulée par injection (31) présente un évidement (39) dans lequel s'engage le verrou (21) lorsqu'il engage par l'arrière la portion de butée (37).

8. Antivol de cadre selon l'une des revendications précédentes,
dans lequel l'étrier rotatif (25) présente une portion d'arrêt (29) qui, dans la position fermée de l'étrier rotatif (25), est disposée à l'extérieur du corps d'antivol (13),
la pièce moulée par injection (31) s'étend le long de la trajectoire circulaire sur toute la portion d'arrêt (29),
et la pièce moulée par injection (31) présente, à l'intérieur de la portion d'arrêt (29), une section transversale constante, en particulier circulaire, et ne s'étend de préférence pas, en section transversale, au-delà d'un contour extérieur de cette section transversale constante, à l'extérieur de la portion d'arrêt (29).

9. Antivol de cadre selon l'une des revendications précédentes,
dans lequel l'insert (33) comprend un conducteur électrique et/ou un conducteur optique.

10. Antivol de cadre selon la revendication 9,
dans lequel l'antivol de cadre (11) comprend un dispositif d'alarme conçu pour surveiller le conducteur en vue d'une dégradation et pour émettre une alarme en cas de présence d'une dégradation.

11. Antivol de cadre selon l'une des revendications précédentes,
dans lequel, à une extrémité de l'extension longitudinale de l'étrier rotatif (25), la pièce moulée par injection (31) présente une structure de couplage, en particulier sous la forme d'un crochet, et l'étrier rotatif (25) est conçu pour être couplé au corps d'antivol (13) au moyen de la structure de couplage par l'intermédiaire d'un ressort de traction.

12. Procédé de réalisation d'un étrier rotatif (25) pour un antivol de cadre selon l'une des revendications précédentes, le procédé consistant à :
- fournir un insert (33), en particulier en métal et/ou en céramique, qui présente une forme d'arc de cercle s'étendant le long d'une trajectoire circulaire et sur lequel est formée une structure de blocage ayant une portion de butée (37) qui est en particulier orientée perpendiculairement au tracé de la trajectoire circulaire ; et
- surmouler l'insert (33) avec une matière plastique pour former une pièce moulée par injection (31) avec insert (33), qui constitue l'étrier rotatif (25).

13. Procédé selon la revendication 12,
dans lequel l'insert (33) est formé par un fil métallique,
la fourniture de l'insert (33) consiste à :
- plier le fil métallique en une forme d'arc de cercle s'étendant le long d'une trajectoire circulaire ; et
- réaliser dans le fil métallique une structure de blocage ayant une portion de butée (37) qui est en particulier orientée perpendiculairement au tracé de la trajectoire circulaire.

14. Procédé selon la revendication 13,
dans lequel la formation de la structure de blocage consiste à :
- réaliser par déformation à froid une nervure (35) qui fait saillie du fil métallique et sur laquelle est réalisée la portion de butée (37).

15. Procédé selon l'une des revendications 12 à 14,
dans lequel, lors du surmoulage, une zone adjacente à la portion de butée (37) le long du tracé de la trajectoire circulaire est évidée, de sorte que la pièce moulée par injection (31) présente dans cette zone un évidement (39) dans lequel peut s'engager un verrou (21) de l'antivol de cadre (11) pour engager par l'arrière la portion de butée (37).
